# EUROPEAN PATENT APPLICATION

(11) **EP 4 746 265 A1**
(43) Date of publication of application: **20.05.2026**
(21) Application number: 24839386.0
(22) Date of filing: 10.06.2024
(51) Int. Cl.: H02K 15/095, H02K 3/46, H02K 1/14, H02K 3/52

(54) **METHOD FOR PRODUCING STATOR BLOCK-CONNECTING STRUCTURE, STATOR BLOCK-CONNECTING STRUCTURE, STATOR, AND MOTOR**

(30) Priority: 12.07.2023 JP 2023114776
(71) Applicant: Panasonic Intellectual Property Management Co., Ltd., Kadoma-shi, Osaka 571-0057 (JP)
(72) Inventor: HAMATANI, Takuto, Osaka 571-0057 (JP)
(74) Representative: SSM Sandmair
(86) International application number: PCT/JP2024/020973
(87) International publication number: WO 2025/013489

(57) **Abstract**

A stator block connection structure is a stator block connection structure to be used for a stator configured by annularly connecting a plurality of adjacent stator blocks including a first stator block and a second stator block. The first stator block includes: a first core block; a first coil wound around the first core block; and a first insulator including a portion located between the first core block and the first coil, and the second stator block includes: a second core block connected to the first core block; a second coil connected to the first coil by a crossover wire and wound around the second core block; and a second insulator including a portion located between the second core block and the second coil. At least one of the first insulator and the second insulator is provided with a guide portion that guides the crossover wire, and the guide portion includes a support surface including a fulcrum that supports the crossover wire in an axial center direction of a rotating shaft of a motor on which the stator is mounted.

## Description

### TECHNICAL FIELD

The present disclosure relates to a method for manufacturing a stator block connection structure used for a stator included in a motor, a stator block connection structure, a stator, and a motor.

### BACKGROUND ART

A motor is used in various electric devices such as household devices such as an air conditioner and a washing machine, and industrial devices. As the motor, a commutator motor using a brush and a brushless motor not using a brush are known. The brushless motor includes, for example, a rotor including a magnet and a stator including a stator core around which a coil is wound via an insulator. The coil is wound around each of a plurality of teeth provided on the stator core.

Conventionally, in this type of motor, in order to prevent a flange portion of an insulator from being damaged by tension when a coil is wound around a stator core, a technique has been proposed in which a wall portion (holding portion) in which a groove for inserting a crossover wire between coils is formed is provided in the insulator (PTL 1).

However, in the configuration of the holding portion of the insulator disclosed in PTL 1, there are a problem that it is difficult to produce the holding portion since the shape is complicated, and a problem that the holding portion can cope with only the crossover wire (conductive wire) having a predetermined wire diameter.

In particular, in a case where a stator in which a stator core is divided into a plurality of core blocks is used, two core blocks around which a coil is wound are connected. In this case, in the configuration of the insulator disclosed in PTL 1, there is a problem that it is difficult to insert the crossover wire between the coils wound around the two coil blocks into the groove of the wall portion without slackening when the two core blocks are connected.

### Citation List

### Patent Literature

PTL 1: Unexamined Japanese Patent Publication No. 2021-69238

### SUMMARY OF THE INVENTION

The present disclosure has been made to solve such problems. An object of the present disclosure is to provide a stator block connection structure or the like in which a plurality of stator blocks including insulators capable of handling crossover wires of a plurality of types of wire diameters and easily holding the crossover wires without slackening are connected even in a case where two core blocks are connected.

In order to achieve the above object, one aspect of a method for manufacturing a stator block connection structure according to the present disclosure is a method for manufacturing a stator block connection structure to be used for a stator configured by annularly connecting a plurality of adjacent stator blocks including a first stator block and a second stator block, the method including: a first step of disposing the first stator block in which a first insulator is fixed to a first core block and the second stator block in which a second insulator is fixed to a second core block to face each other; a second step of forming a first coil by winding a conductive wire around the first core block via the first insulator; a third step of forming a second coil by winding the conductive wire around the second core block via the second insulator; and a fourth step of connecting the first core block around which the first coil is wound and the second core block around which the second coil is wound, in which in the fourth step, the first core block and the second core block are connected while a crossover wire that is a portion of the conductive wire between an end point of the first coil and a start point of the second coil is guided by a guide portion provided on at least one of the first insulator and the second insulator, and the crossover wire is supported by the guide portion in an axial center direction of a rotating shaft in a motor on which the stator is mounted.

One aspect of a stator block connection structure according to the present disclosure is a stator block connection structure used for a stator configured by annularly connecting a plurality of adjacent stator blocks including a first stator block and a second stator block, the first stator block including: a first core block; a first coil wound around the first core block; and a first insulator including a portion located between the first core block and the first coil, the second stator block including: a second core block connected to the first core block; a second coil connected to the first coil by a crossover wire and wound around the second core block; and a second insulator including a portion located between the second core block and the second coil, in which at least one of the first insulator and the second insulator is provided with a guide portion that guides the crossover wire, and the guide portion includes a support surface including a fulcrum that supports the crossover wire in an axial center direction of a rotating shaft of a motor on which the stator is mounted.

It is preferable that the crossover wire includes one end portion connected to an end point of the first coil, the crossover wire includes another end portion connected to a start point of the second coil, and the fulcrum exists at a position higher than the end point and the start point.

It is preferable that the support surface is provided with a groove that receives the crossover wire.

The support surface may be an inclined surface that is inclined.

The support surface may be inclined to go down toward a side of a start point of the second coil.

The support surface may be a curved surface.

The support surface may be a plane that is not inclined.

The fulcrum may include a plurality of the fulcrums.

The guide portion may be a protrusion protruding from an outer surface of at least one of the first insulator and the second insulator toward an outer periphery in a direction orthogonal to the axial center direction.

In one aspect of a stator according to the present disclosure, the above stator block connection structures are annularly connected.

One aspect of a motor according to the present disclosure includes: the above stator; and a rotor located to face the stator.

According to the present disclosure, crossover wires having a plurality of types of wire diameters can be handled, and the crossover wires can be easily held by insulators without slackening.

### BRIEF DESCRIPTION OF THE DRAWINGS

Fig. 1 is an external perspective view of a motor according to an exemplary embodiment.
Fig. 2 is an exploded perspective view of the motor according to the exemplary embodiment.
Fig. 3 is a cross-sectional view of the motor according to the exemplary embodiment taken along a plane passing through a rotating shaft.
Fig. 4 is a cross-sectional view of the motor according to the exemplary embodiment taken along a plane orthogonal to the rotating shaft.
Fig. 5 is a perspective view of a stator according to the exemplary embodiment.
Fig. 6 is a perspective view when one stator block connection structure is separated from the stator according to the exemplary embodiment.
Fig. 7 is a side view of the stator block connection structure according to the exemplary embodiment.
Fig. 8 is a top view of the stator block connection structure according to the exemplary embodiment.
Fig. 9 is a perspective view of a stator block according to the exemplary embodiment.
Fig. 10 is a perspective view of the stator block according to the exemplary embodiment before a coil is wound.
Fig. 11 is an enlarged view of a region XI surrounded by a broken line in Fig. 10.
Fig. 12 is an exploded perspective view of the stator block according to the exemplary embodiment before the coil is wound.
Fig. 13 is a top view of the stator block according to the exemplary embodiment before the coil is wound.
Fig. 14 is a side view of the stator block according to the exemplary embodiment before the coil is wound.
Fig. 15 is a cross-sectional view of the stator block according to the exemplary embodiment before the coil is wound.
Fig. 16 is a diagram for describing a step of forming a coil by winding a conductive wire around a stator block in a method for manufacturing a stator block connection structure according to the exemplary embodiment.
Fig. 17 is a diagram for describing a step of connecting two stator blocks in the method for manufacturing a stator block connection structure according to the exemplary embodiment.
Fig. 18 is a partially enlarged view illustrating a configuration of a stator block according to Modification 1.
Fig. 19 is a partially enlarged view illustrating a configuration of a stator block according to Modification 2.
Fig. 20 is a diagram illustrating a variation of a guide portion of an insulator.
Fig. 21 is a diagram illustrating a first modification of an arrangement pattern of two core blocks in the method for manufacturing a stator block connection structure.
Fig. 22 is a diagram illustrating a second modification of the arrangement pattern of the two core blocks in the method for manufacturing a stator block connection structure.

### DESCRIPTION OF EMBODIMENT

Hereinafter, exemplary embodiments of the present disclosure will be described with reference to the drawings. The exemplary embodiments to be described below illustrate specific examples of the present disclosure. Thus, numerical values, configuration elements, arrangement positions and connection forms of the configuration elements, steps, order of the steps, and the like, which are described in the following exemplary embodiments, are illustrative and are not to limit the scope of the present disclosure. Thus, among the configuration elements in the following exemplary embodiments, configuration elements that are not described in independent claims indicating the highest concept of the present disclosure are described as optional configuration elements.

Each of the drawings is a schematic view and is not necessarily exactly illustrated. In each drawing, substantially the same configurations as those in other drawings are denoted by the same reference marks, and redundant description will be omitted or simplified.

In the present specification, a radial direction of stator 10 and rotor 20 is referred to as a "radial direction", and a rotation direction of rotor 20 is referred to as a "circumferential direction". That is, a direction extending from axial center C of rotating shaft 21, with axial center C as a center, is the "radial direction", and a direction around axial center C of rotating shaft 21, with axial center C as a center, is the "circumferential direction". Therefore, the "radial direction" is a direction orthogonal to a direction in which axial center C of rotating shaft 21 extends. In the present specification, the terms "upper" and "lower" do not necessarily refer to an upward direction (vertically upward) and a downward direction (vertically downward) in terms of absolute space recognition.

### (Exemplary embodiment)

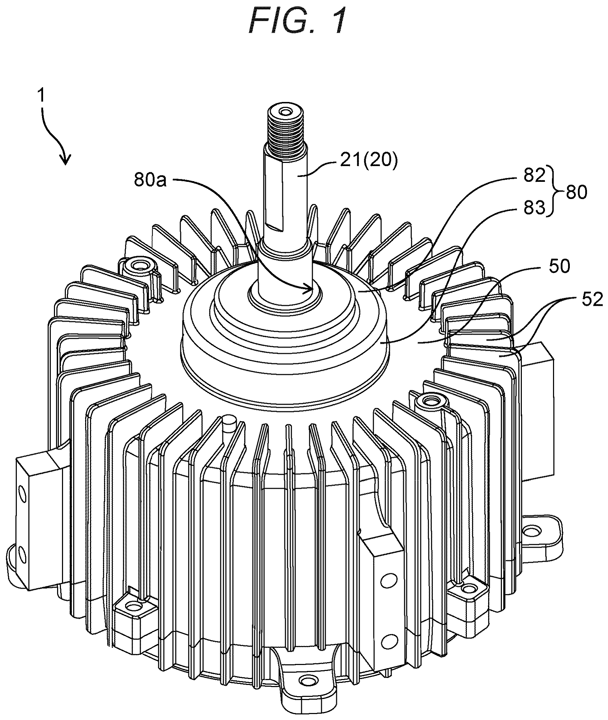

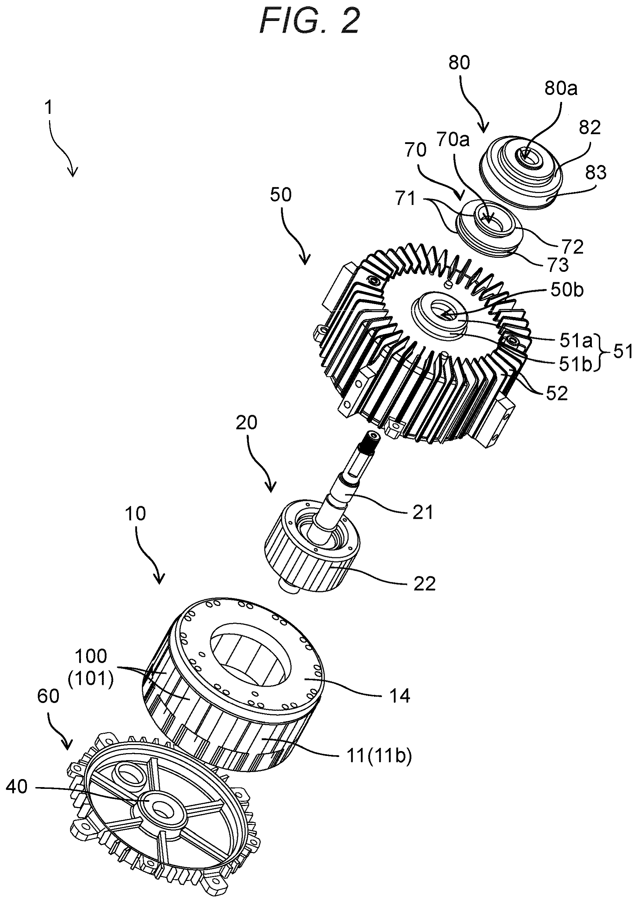

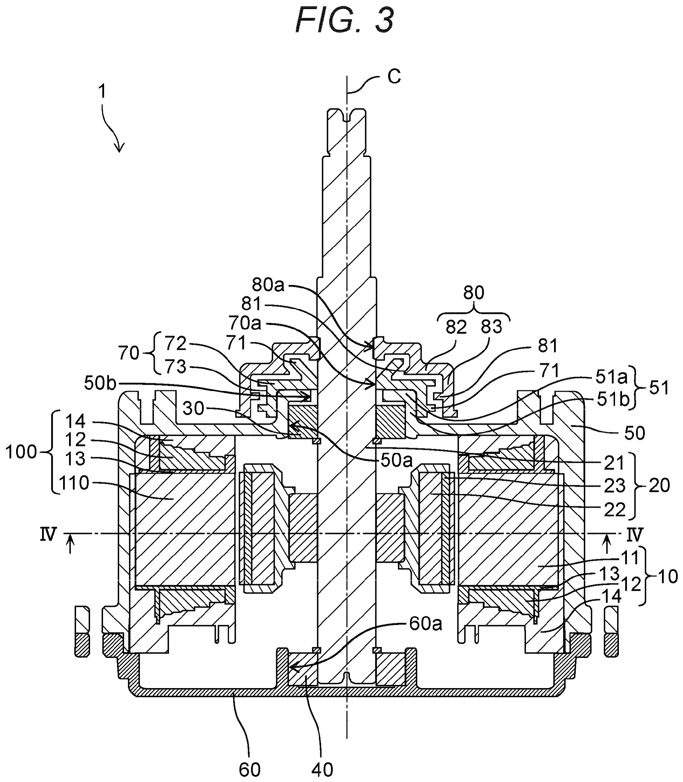

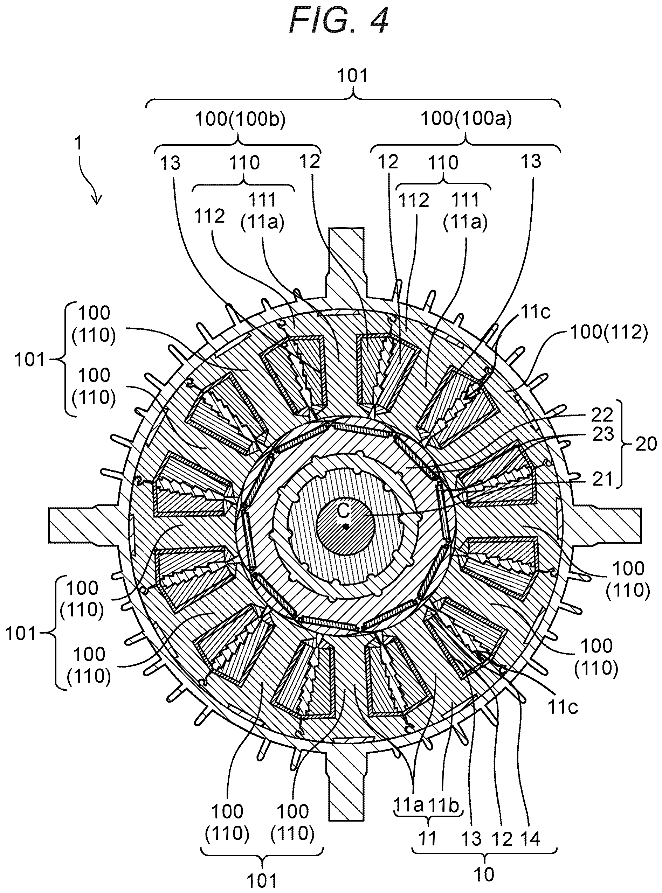

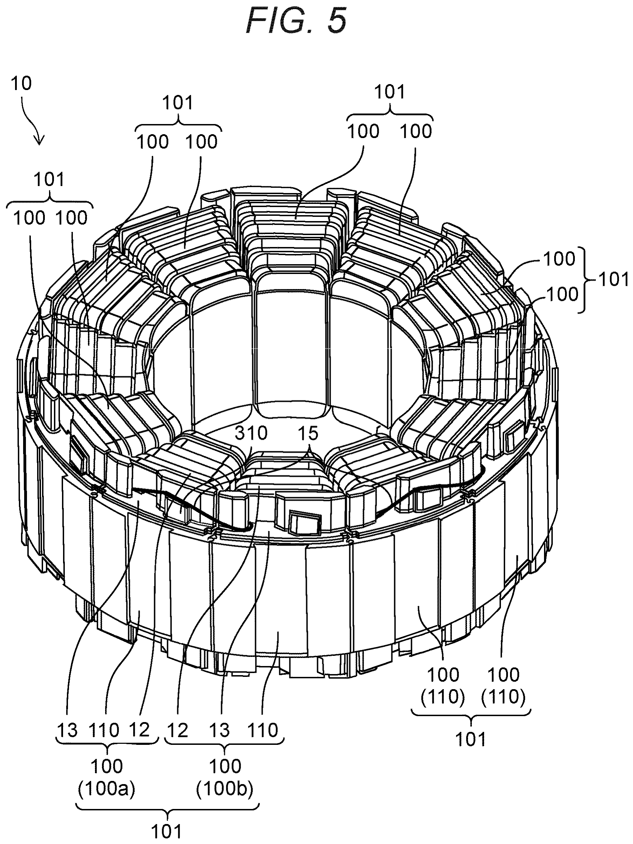

An overall configuration of motor 1 according to an exemplary embodiment will be described with reference to Figs. 1 to 5. Fig. 1 is an external perspective view of motor 1 according to the exemplary embodiment. Fig. 2 is an exploded perspective view of motor 1 according to the exemplary embodiment. Fig. 3 is a cross-sectional view of motor 1 according to the exemplary embodiment taken along a plane passing through rotating shaft 21. Fig. 4 is a cross-sectional view of the motor according to the exemplary embodiment taken along a plane orthogonal to rotating shaft 21. Fig. 4 illustrates a cross section taken along line IV-IV in Fig. 3. Fig. 5 is a perspective view of stator 10 according to the exemplary embodiment. In Figs. 3 to 5, coil 12 is schematically illustrated. In Figs. 3 and 4, only a portion appearing in the cross section is illustrated.

As illustrated in Figs. 1 to 4, motor 1 includes stator 10 and rotor 20 including rotating shaft 21. Motor 1 further includes first bearing 30, second bearing 40, first bracket 50, second bracket 60, first cover 70, and second cover 80.

Motor 1 is a brushless motor. As illustrated in Figs. 3 and 4, motor 1 is an inner rotor type motor in which rotor 20 is disposed inside stator 10. That is, stator 10 is disposed to surround rotor 20. Therefore, rotor 20 rotates about axial center C of rotating shaft 21 as a rotation center inside stator 10.

As illustrated in Figs. 3 and 4, stator 10 is disposed to face rotor 20 with a minute air gap interposed between stator 10 and rotor 20. Specifically, stator 10 is disposed so as to surround rotor core 22 of rotor 20.

Stator 10 generates a magnetic force that acts on rotor 20. Specifically, stator 10 has a configuration in which a plurality of N poles and S poles are alternately and repeatedly present along a rotation direction to generate a magnetic flux on an air gap surface with rotor core 22 of rotor 20. Stator 10 constitutes a magnetic circuit together with rotor 20.

Stator 10 constitutes an armature. Stator 10 includes stator core 11 (stator iron core), coil 12 wound around stator core 11, and insulator 13. As illustrated in Figs. 2 to 4, stator core 11, coil 12, and insulator 13 are covered with molding resin 14. Fig. 5 illustrates stator 10 in a state before being covered with molding resin 14.

Stator core 11 is an iron core that generates a magnetic force for rotating rotor 20. As illustrated in Fig. 4, stator core 11 includes teeth 11a and yoke 11b. Stator core 11 includes a plurality of teeth 11a.

The plurality of teeth 11a are provided inside yoke 11b. Therefore, the plurality of teeth 11a protrude from yoke 11b toward rotor 20. That is, the plurality of teeth 11a protrude toward axial center C of rotating shaft 21. Specifically, the plurality of teeth 11a radially extend in a direction (radial direction) orthogonal to a direction in which axial center C of rotating shaft 21 extends. The plurality of teeth 11a are disposed at equal intervals along the circumferential direction while forming slots 11c between two adjacent teeth 11a. Stator core 11 includes 12 teeth 11a. That is, the number of slots of stator 10 is 12.

An extension portion extending to both sides in the circumferential direction is formed at an extending distal end portion of each of teeth 11a. The inner peripheral surface located at the distal end portion of teeth 11a including the extension portion is a magnetic pole surface facing the outer peripheral surface of rotor 20. In two adjacent teeth 11a, there is a gap (slot opening) between the extension portion of one tooth 11a and the extension portion of another tooth 11a.

As illustrated in Fig. 4, yoke 11b is formed in an annular shape so as to surround rotor 20. Yoke 11b is a back yoke located outside the plurality of teeth 11a. Yoke 11b is formed in an annular shape about axial center C of rotating shaft 21.

Coil 12 is a stator coil which is an armature winding of stator 10. Coil 12 is a winding coil wound around stator core 11 so as to generate a magnetic force acting on rotor 20 when a current flows. Specifically, as illustrated in Figs. 3 and 4, coil 12 is constituted by a conductive wire wound around each tooth 11a via insulator 13. Coil 12 is a concentrated winding coil wound around each tooth 11a. Coil 12 is accommodated in slot 11c of stator core 11. The conductive wire constituting coil 12 is, for example, an insulating coated wire. The conductive wire constituting coil 12 includes a conductive wire made of a conductive material such as copper or aluminum as a core wire, and an insulating film coating the conductive wire.

Coil 12 is a three-phase winding as a three-phase synchronous motor so as to rotate rotor 20. Specifically, coil 12 includes unit coils of three phases of a U phase, a V phase, and a W phase that are electrically different from each other by 120 degrees. That is, coil 12 wound around each of teeth 11a is energized and driven by three-phase alternating current energized in units of phases of the U phase, the V phase, and the W phase. As a result, a main magnetic flux of stator 10 is generated in each tooth 11a. That is, each tooth 11a is a magnetic pole tooth. Each tooth 11a is an electromagnet that generates a magnetic force when a current flows through coil 12.

Coil 12 of each phase is electrically connected to a circuit board (not illustrated). Specifically, coil 12 of each phase is electrically connected to a winding connection portion of the circuit board via a lead wire, a connection terminal, and the like. The circuit board is a wiring substrate in which a plurality of wirings made of a conductive material such as copper are formed in a predetermined pattern. Three connection terminal portions corresponding to the U phase, the V phase, and the W phase are formed in each of the plurality of wirings. A plurality of electronic components (not illustrated) for generating a current to be supplied to the plurality of coils 12 of stator 10 are mounted on the circuit board. The plurality of electronic components constitute a power supply circuit that generates three-phase alternating currents of a U phase, a V phase, and a W phase.

As illustrated in Fig. 4, stator core 11 is divided into a plurality of core blocks 110 (divided cores). That is, stator core 11 includes the plurality of core blocks 110. Specifically, stator core 11 is divided into the plurality of core blocks 110 according to the number of teeth 11a. In stator core 11, one tooth 11a exists in each of core blocks 110. Stator core 11 includes 12 teeth 11a. Therefore, stator core 11 is divided into 12 core blocks 110.

The plurality of core blocks 110 are annularly connected. Specifically, the plurality of core blocks 110 are connected in an annular shape. That is, stator core 11 is configured by connecting the plurality of core blocks 110 in an annular shape. In the present exemplary embodiment, 12 core blocks 110 are disposed in an annular shape. Two adjacent core blocks 110 are connected to each other. Coil 12 is wound around each of the plurality of core blocks 110. Specifically, coil 12 is wound around the teeth 11a of each core block 110.

Insulator 13 includes a portion interposed between stator core 11 and coil 12. Insulator 13 covers stator core 11. Specifically, insulator 13 covers at least teeth 11a of stator core 11. Similarly to coil 12, insulator 13 is provided in each of the plurality of teeth 11a. That is, stator 10 includes the plurality of insulators 13.

As illustrated in Figs. 4 and 5, one core block 110, one coil 12, and one insulator 13 constitute stator block 100. Stator block 100 is an intermediate assembly used for stator 10. That is, stator block 100 is an intermediate part used when stator 10 is manufactured. Stator 10 includes a plurality of stator blocks 100. As illustrated in Figs. 4 and 5, stator 10 is configured by annularly connecting the plurality of stator blocks 100. As an example, stator 10 is configured by connecting 12 stator blocks 100 in an annular shape. In stator 10, two adjacent stator blocks 100 are connected. Connected two stator blocks 100 are stator block connection structure 101. Detailed configurations of stator block 100 and stator block connection structure 101 will be described later.

Rotor 20 illustrated in Figs. 2 to 4 rotates by a magnetic force generated by stator 10. In rotor 20, a plurality of N poles and S poles that generate magnetic flux in the rotation direction (circumferential direction) are alternately and repeatedly present. As a result, rotor 20 generates a magnetic force acting on stator 10. The direction of the magnetic flux generated by rotor 20 is a direction orthogonal to a direction (axial center direction) in which axial center C of rotating shaft 21 extends. That is, the direction of the magnetic flux generated by rotor 20 is the radial direction.

As illustrated in Figs. 3 and 4, rotor 20 includes rotating shaft 21, rotor core 22, and permanent magnet 23. Rotor 20 is a permanent magnet embedded-type rotor (interior permanent magnet (IPM) rotor) in which permanent magnet 23 is embedded in rotor core 22. Therefore, motor 1 is an IPM motor.

Rotating shaft 21 is an elongated shaft. Rotating shaft 21 is a metal rod, for example. Rotating shaft 21 is fixed to rotor core 22. Specifically, rotating shaft 21 is inserted into a through hole provided at a center of rotor core 22 and fixed to rotor core 22 so as to extend on both sides of rotor core 22 in the direction in which axial center C extends. Rotating shaft 21 is fixed to rotor core 22 via a holder that holds rotor core 22. However, the present disclosure is not limited to this configuration. For example, rotating shaft 21 may be directly fixed to rotor core 22 by being press-fitted or shrink-fitted into a through hole of rotor core 22.

Rotor core 22 is a stacked body in which a plurality of steel sheets are stacked in the direction (axial center direction) in which axial center C of rotating shaft 21 extends. Each of the plurality of steel sheets is a punched electromagnetic steel sheet formed in a predetermined shape, for example. The plurality of steel sheets are fixed to each other by, for example, crimping. Rotor core 22 is not limited to a stacked body of the plurality of steel sheets. Rotor core 22 may be a bulk body configured by a magnetic material.

Permanent magnet 23 is inserted into a magnet insertion bore provided in rotor core 22. 10 magnet insertion bores are provided in rotor core 22 at equal intervals in the circumferential direction. Therefore, rotor 20 includes 10 permanent magnets 23 disposed at equal intervals in the circumferential direction. That is, the number of poles of motor 1 is 10. Permanent magnet 23 is a sintered magnet, but may be a bonded magnet.

As illustrated in Fig. 3, rotating shaft 21 of rotor 20 is supported by first bearing 30 and second bearing 40. First bearing 30 and second bearing 40 are bearings that rotatably support rotating shaft 21. First bearing 30 supports a portion of rotating shaft 21 protruding from one side of rotor core 22. On the other hand, second bearing 40 supports a portion of rotating shaft 21 protruding from the other side of rotor core 22. First bearing 30 and second bearing 40 are ball bearings, for example. However, first bearing 30 and second bearing 40 are not limited thereto. For example, first bearing 30 and second bearing 40 may be other bearings such as thrust bearings.

First bracket 50 holds first bearing 30. Specifically, first bearing 30 is accommodated and fixed in recess 50a provided in first bracket 50. Second bracket 60 holds second bearing 40. Specifically, second bearing 40 is accommodated and fixed in recess 60a provided in second bracket 60. First bracket 50 and second bracket 60 are made of a metallic material or a resin material.

First bracket 50 and second bracket 60 constitute an exterior of motor 1. That is, first bracket 50 and second bracket 60 are outer shell members of motor 1. First bracket 50 is a bottomed cylindrical frame (housing) including an opening as a whole. On the other hand, second bracket 60 is a bottom plate that closes the opening of first bracket 50. First bracket 50 and second bracket 60 are made of a metallic material or a resin material. For example, first bracket 50 is a metal frame made of metal, and second bracket 60 is a resin plate made of resin.

Through hole 50b through which rotating shaft 21 of rotor 20 passes is formed in first bracket 50. A part of rotating shaft 21 protrudes from first bracket 50 to the outside via through hole 50b. A load such as a rotating fan is attached to a portion of rotating shaft 21 protruding outward from first bracket 50. That is, in rotating shaft 21, the portion protruding from first bracket 50 is an output shaft.

As illustrated in Fig. 3, first bracket 50 includes bracket protrusion 51 protruding outward in a direction in which axial center C of rotating shaft 21 extends. Bracket protrusion 51 includes bracket top plate part 51a in which through hole 50b is formed and bracket side plate part 51b erected from an outer peripheral end portion of bracket top plate part 51a. Specifically, bracket protrusion 51 is formed in a bottomed cylindrical shape. Therefore, bracket top plate part 51a has a disk shape. Bracket side plate part 51b has a cylindrical shape. By providing bracket protrusion 51, a step is formed on a bottom plate part of first bracket 50. An inner portion of bracket protrusion 51 is recess 50a.

As illustrated in Figs. 1 and 2, first bracket 50 includes a plurality of heat dissipation fins 52. Each of the plurality of heat dissipation fins 52 has a plate shape. The plurality of heat dissipation fins 52 are provided in first bracket 50 at equal intervals along the circumferential direction. Each of the plurality of heat dissipation fins 52 is formed so as to extend from an outer peripheral end portion of the bottom plate part of first bracket 50 to a cylindrical side wall portion.

As illustrated in Fig. 3, first cover 70 is an inner cover located inside second cover 80. First cover 70 is fixed to first bracket 50. Through hole 70a through which rotating shaft 21 passes is formed in first cover 70. Rotating shaft 21 passes through through hole 70a. That is, rotating shaft 21 passing through through hole 70a is not in contact with first cover 70. There is a gap between rotating shaft 21 and an inner surface of through hole 70a. Therefore, even when rotating shaft 21 rotates, first cover 70 does not rotate.

Second cover 80 is an outer cover located outside first cover 70. Second cover 80 covers first cover 70 without coming into contact with first cover 70. That is, second cover 80 and first cover 70 are separated from each other. Second cover 80 is not in contact with first bracket 50 either.

Second cover 80 is fixed to rotating shaft 21 instead of first bracket 50. Therefore, when rotating shaft 21 rotates, second cover 80 rotates together with rotating shaft 21. In the present exemplary embodiment, through hole 80a through which rotating shaft 21 passes is formed in second cover 80. Second cover 80 is fixed to rotating shaft 21 in a state where rotating shaft 21 passes through through hole 80a. In this case, second cover 80 and rotating shaft 21 are in contact with each other. For example, rotating shaft 21 and second cover 80 can be fixed by press-fitting rotating shaft 21 into through hole 80a. Second cover 80 may be fixed to rotating shaft 21 without being in contact with rotating shaft 21. For example, a bush or the like may be inserted between through hole 80a and rotating shaft 21, and second cover 80 and rotating shaft 21 may be fixed with a bolt or the like.

As illustrated in Fig. 3, a plurality of outer protrusions 71 protruding outward are provided on an outer surface (on a side of second cover 80) of first cover 70. That is, the plurality of outer protrusions 71 protrude toward second cover 80. The plurality of outer protrusions 71 are wall portions having a plate shape in a cross-sectional view. The plurality of outer protrusions 71 have an annular shape.

First cover 70 includes inner top plate part 72 and inner side plate part 73. Inner top plate part 72 has a flat plate shape. Inner top plate part 72 faces bracket top plate part 51a of bracket protrusion 51 of first bracket 50. Specifically, inner top plate part 72 is in surface contact with bracket top plate part 51a. Through hole 70a of first cover 70 is formed in a central portion of inner top plate part 72. Inner side plate part 73 is erected from an outer peripheral end portion of inner top plate part 72. Inner side plate part 73 faces bracket side plate part 51b of bracket protrusion 51 of first bracket 50. Specifically, inner side plate part 73 has a cylindrical shape. Inner side plate part 73 is in surface contact with bracket side plate part 51b. First cover 70 is fixed to first bracket 50 by press-fitting inner side plate part 73 into bracket protrusion 51 of first bracket 50.

A plurality of inner protrusions 81 protruding inward are provided on an inner (first cover 70) side surface of second cover 80. That is, the plurality of inner protrusions 81 protrude toward first cover 70.

Second cover 80 includes outer top plate part 82 and outer side plate part 83. Outer top plate part 82 faces inner top plate part 72 of first cover 70. Outer top plate part 82 and inner top plate part 72 are separated from each other and disposed at a predetermined distance. Outer top plate part 82 includes a step formed such that a central portion protrudes outward. Outer side plate part 83 is erected from an outer peripheral end portion of outer top plate part 82. Outer side plate part 83 faces inner side plate part 73 of first cover 70. Outer side plate part 83 and inner side plate part 73 are separated from each other and disposed at a predetermined distance. Second cover 80 and first bracket 50 are not in contact with each other. Therefore, there is a gap between a distal end portion of outer side plate part 83 and bracket top plate part 51a of first bracket 50.

A labyrinth structure is formed by the plurality of outer protrusions 71 and the plurality of inner protrusions 81 existing between first cover 70 and second cover 80. As a result, even if foreign matter such as water or dust enters from the gap between second cover 80 and first bracket 50, the foreign matter can be suppressed from reaching the inside of motor 1.

First cover 70 and second cover 80 are rubber covers made of a rubber material. Therefore, first cover 70 and second cover 80 have rubber elasticity. First cover 70 fixed to first bracket 50 functions as a drip-proof rubber. Second cover 80, which is fixed to rotating shaft 21 and rotates, functions as a draining rubber.

Since second cover 80 is made of a rubber material, second cover 80 can be fixed in close contact with rotating shaft 21. For example, by press-fitting rotating shaft 21 into through hole 80a of second cover 80, second cover 80 can be fixed in close contact with rotating shaft 21 without a gap between rotating shaft 21 and through hole 80a. Since first cover 70 is made of a rubber material, first cover 70 can be easily fixed to bracket protrusion 51 of first bracket 50. For example, by press-fitting first cover 70 into bracket protrusion 51 of first bracket 50, first cover 70 can be fixed in close contact with bracket protrusion 51 of first bracket 50.

As the rubber material constituting first cover 70 and second cover 80, a chloroprene rubber (polychloroprene (CR)) having excellent impact resilience and aging resistance, an ethylene propylene rubber (EPDM) having a small specific gravity and excellent heat resistance, cold resistance, and aging resistance, or the like can be used. First cover 70 and second cover 80 may be made of the same rubber material, or may be made of different rubber materials. In a case where first cover 70 and second cover 80 are made of different rubber materials, inner first cover 70 (drip-proof rubber) is preferably made of chloroprene rubber, and outer second cover 80 (draining rubber) is preferably made of ethylene propylene rubber. An elastic force of the rubber material constituting outer second cover 80 is preferably higher than an elastic force of the rubber material constituting inner first cover 70. First cover 70 and second cover 80 may be made of a material other than a rubber material. For example, first cover 70 and second cover 80 may be made of a resin material or a metallic material other than a rubber material.

In motor 1 configured as described above, when coil 12 of stator 10 is energized, a field current flows through coil 12, and a magnetic flux is generated in stator 10 (stator core 11). As a result, a magnetic flux directed from stator 10 toward rotor 20 is generated. Specifically, a magnetic flux directed from each of the plurality of teeth 11a of stator core 11 included in stator 10 toward rotor core 22 included in rotor 20 is generated. In rotor 20, a magnetic flux passing through stator 10 is generated by permanent magnet 23 included in rotor core 22. A magnetic force generated by the interaction between the magnetic flux generated in stator 10 and the magnetic flux generated from permanent magnet 23 of rotor 20 becomes a torque that rotates rotor 20. As a result, rotor 20 rotates.

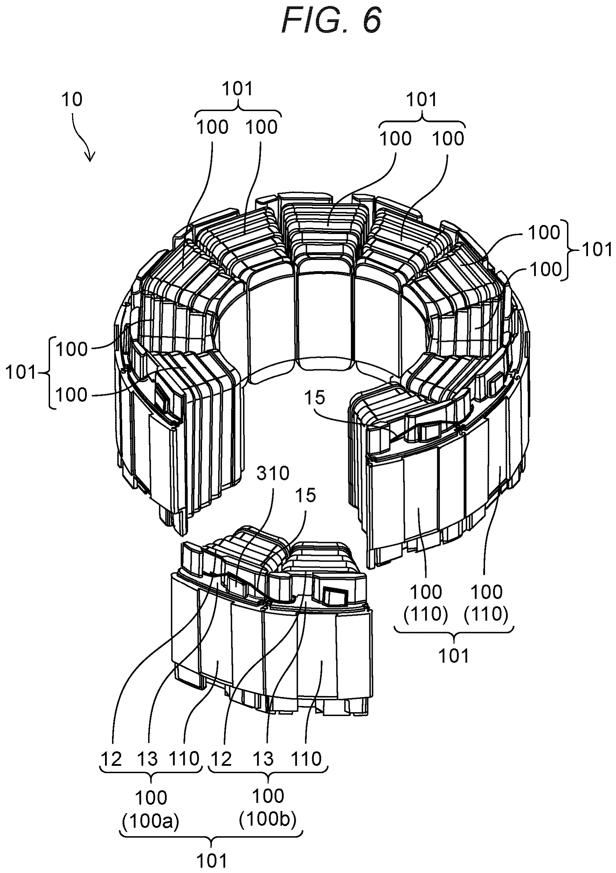

Next, specific configurations of stator block 100 and stator block connection structure 101 in stator 10 according to the present exemplary embodiment will be described with reference to Figs. 6 to 15 while referring to Figs. 2 to 5.

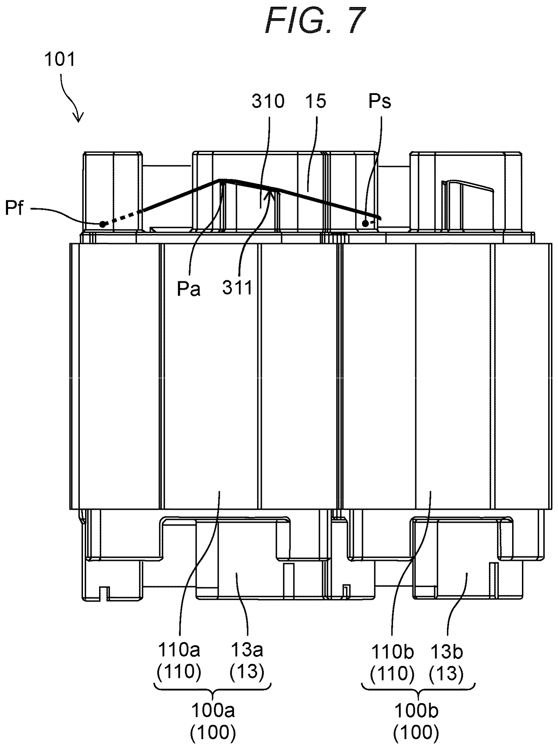

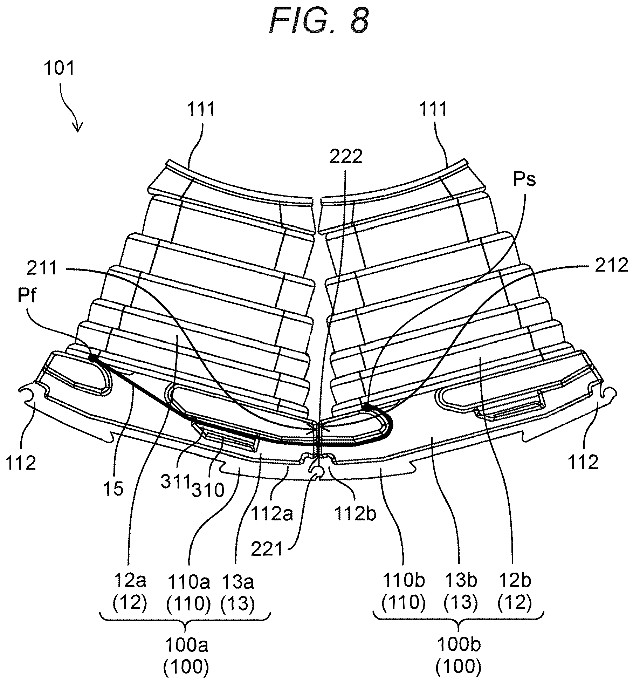

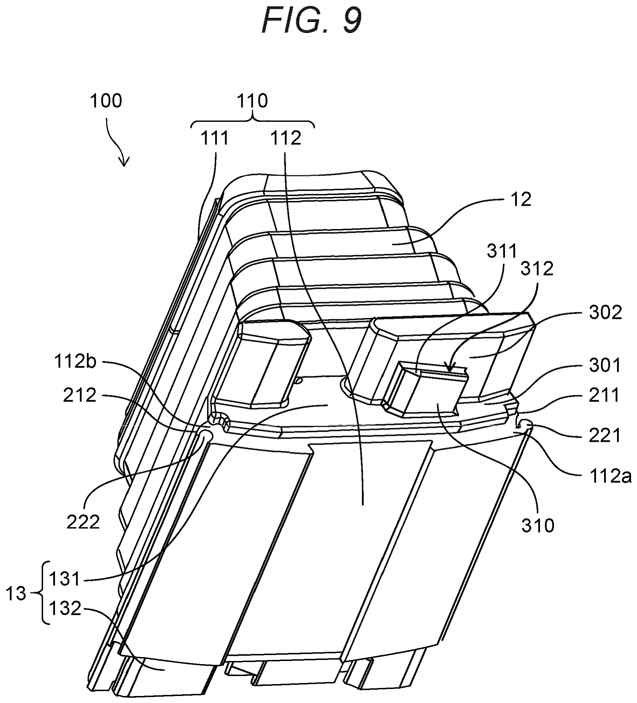

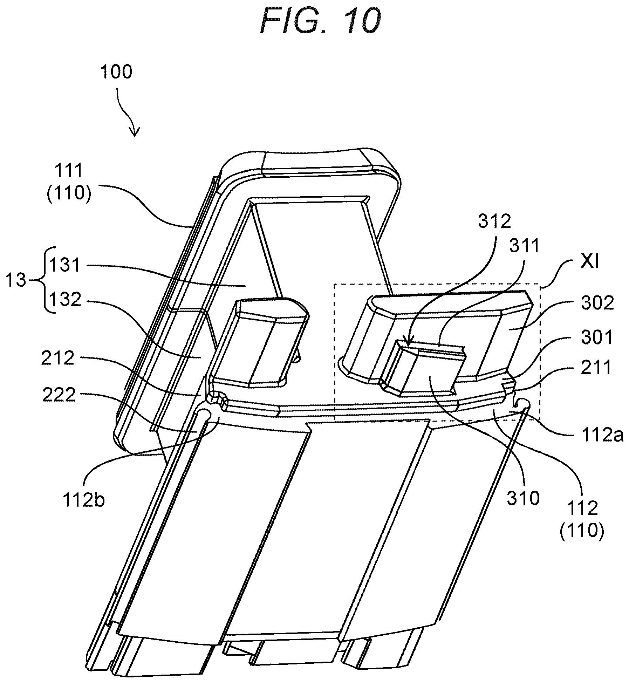

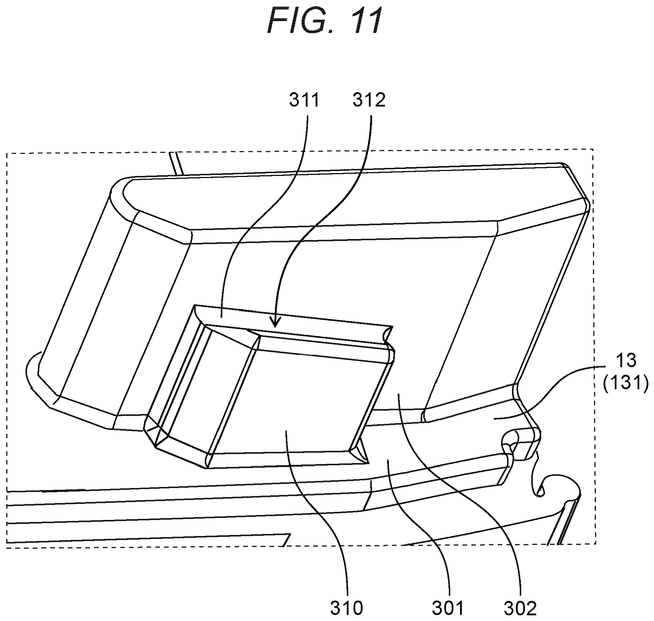

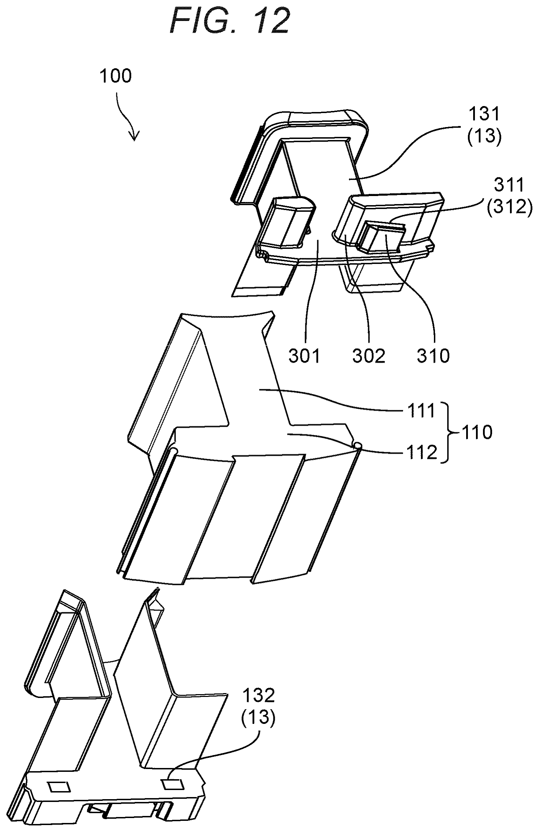

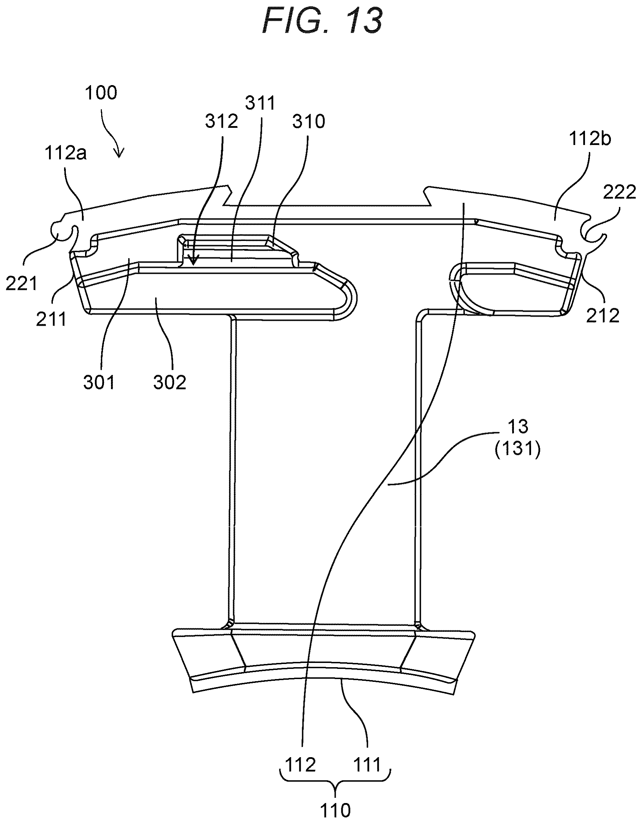

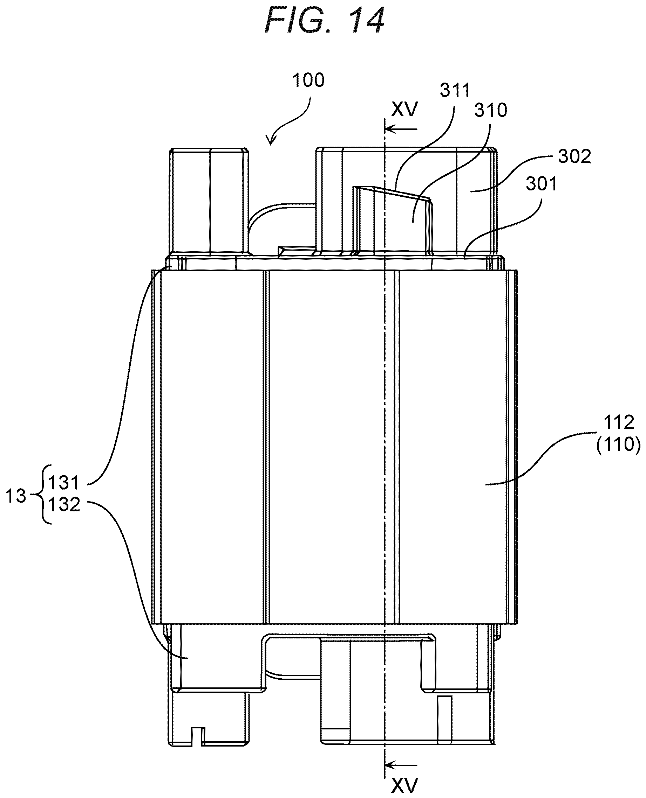

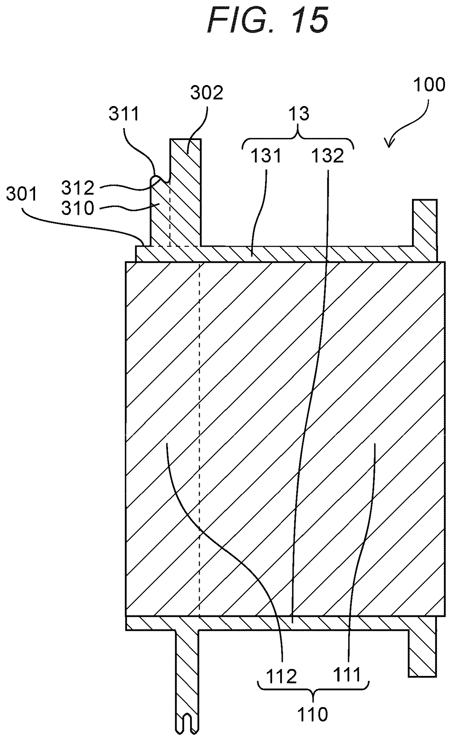

Fig. 6 is a perspective view when one stator block connection structure 101 is separated from stator 10 according to the exemplary embodiment. Fig. 7 is a side view of stator block connection structure 101 according to the exemplary embodiment. Fig. 8 is a top view of stator block connection structure 101 according to the exemplary embodiment. Fig. 9 is a perspective view of stator block 100 according to the exemplary embodiment. Fig. 10 is a perspective view of stator block 100 according to the exemplary embodiment before coil 12 is wound. Fig. 11 is an enlarged view of region XI surrounded by a broken line in Fig. 10. Fig. 12 is an exploded perspective view of stator block 100 according to the exemplary embodiment before coil 12 is wound. Fig. 13 is a top view of stator block 100 according to the exemplary embodiment before coil 12 is wound. Fig. 14 is a side view of stator block 100 according to the exemplary embodiment before coil 12 is wound. Fig. 15 is a cross-sectional view of stator block 100 according to the exemplary embodiment before coil 12 is wound. Fig. 15 illustrates a cross section taken along line XV-XV in Fig. 14. In Figs. 6 to 15, coil 12 is schematically illustrated.

As illustrated in Fig. 5, stator 10 is configured by connecting the plurality of stator blocks 100. As illustrated in Fig. 6, in stator block connection structure 101, two adjacent stator blocks 100 are connected in the plurality of stator blocks 100. Therefore, stator 10 includes a plurality of stator block connection structures 101. For example, stator 10 includes six stator block connection structures 101. The number of stator block connection structures 101 included in stator 10 may be one, two, or the like instead of six. In this case, the remaining portion of stator 10 is connected by the plurality of stator blocks 100.

As illustrated in Figs. 7 and 8, each of two stator blocks 100 constituting one stator block connection structure 101 includes core block 110, coil 12, and insulator 13. In two connected stator blocks 100, coil 12 of one stator block 100 and coil 12 of another stator block 100 are connected by crossover wire 15. Specifically, one end portion of crossover wire 15 is connected to an end point of coil 12 of one stator block 100. The other end portion of crossover wire 15 is connected to a start point of coil 12 of another stator block 100.

Core block 110 is configured by stacking a plurality of steel sheets. Specifically, core block 110 is a stacked body in which a plurality of punched electromagnetic steel sheets are stacked along a direction in which axial center C of rotating shaft 21 extends. The plurality of electromagnetic steel sheets are fixed to each other by, for example, crimping.

As illustrated in Figs. 9 to 15, in each stator block 100, core block 110 includes tooth portion 111 and yoke portion 112. Tooth portion 111 is tooth 11a of stator core 11 illustrated in Fig. 2.

As illustrated in Fig. 4, tooth portion 111 is formed inside yoke portion 112. Tooth portion 111 extends from yoke portion 112 toward a central portion of stator core 11. Specifically, tooth portion 111 extends from yoke portion 112 toward rotating shaft 21. That is, tooth portion 111 extends so as to protrude inward in the radial direction of stator 10. Coil 12 is wound around tooth portion 111. Specifically, coil 12 is wound around tooth portion 111 via insulator 13.

Yoke portion 112 is a back yoke formed outside tooth portion 111. Yoke portion 112 extends along the circumferential direction of stator core 11. As illustrated in Fig. 13, yoke portion 112 includes first end portion 112a that is one end portion in the circumferential direction and second end portion 112b that is the other end portion in the circumferential direction. As illustrated in Fig. 8, in two adjacent stator blocks 100, two adjacent yoke portions 112 are connected with their circumferential end surfaces abutting each other. As illustrated in Figs. 8 and 13, in yoke portion 112 of each core block 110, first end portion 112a includes first connection surface 211 to which another core block 110 is connected and projection 221 at least a part of which protrudes from first connection surface 211. Second end portion 112b includes second connection surface 212 to which the other core block is connected and recess 222 at least a part of which is recessed from second connection surface 212.

When two stator blocks 100 are connected, two core blocks 110 in two stator blocks 100 are connected. In this case, first end portion 112a of yoke portion 112 of one core block 110 and second end portion 112b of yoke portion 112 of another core block 110 are connected. Specifically, first connection surface 211 at first end portion 112a of yoke portion 112 of one core block 110 and second connection surface 212 at second end portion 112b of yoke portion 112 of another core block 110 are brought into contact with each other, and projection 221 at first end portion 112a of yoke portion 112 of one core block 110 and recess 222 at second end portion 112b of yoke portion 112 of another core block 110 are fitted with each other.

As illustrated in Fig. 4, insulator 13 includes a portion located between core block 110 and coil 12. As illustrated in Figs. 10 and 12, insulator 13 covers at least tooth portion 111. Insulator 13 covers not only tooth portion 111 but also yoke portion 112. Insulator 13 has a frame-shaped frame body (coil bobbin) around which coil 12 is wound. The frame body of insulator 13 is formed so as to surround at least a body portion of tooth portion 111 (tooth 11a). Insulator 13 is, for example, a resin molded article made of an insulating resin material such as polybutylene terephthalate (PBT).

Insulator 13 is fixed to core block 110. As illustrated in Figs. 13 and 14, insulator 13 is divided into two. Insulator 13 includes first member 131 and second member 132. First member 131 and second member 132 are disposed so as to sandwich core block 110 from a direction in which axial center C of rotating shaft 21 extends, and are connected to each other. For example, first member 131 and second member 132 are locked and connected by a locking structure provided in each member. As a result, first member 131 and second member 132 are fixed to core block 110.

As illustrated in Fig. 7, insulator 13 is provided with guide portion 310 that guides crossover wire 15 between two coils 12. Crossover wire 15 connects end point Pf of one coil 12 of two coils 12 and start point Ps of another coil 12. Therefore, guide portion 310 is provided between end point Pf of one coil 12 of two coils 12 and start point Ps of another coil 12. By stretching crossover wire 15 by guide portion 310, occurrence of slack in crossover wire 15 can be suppressed.

As illustrated in Figs. 10 to 15, guide portion 310 is a protrusion protruding in the radial direction from an outer surface of insulator 13. In the present exemplary embodiment, guide portion 310 is provided on vertical wall portion 302 erected from flange portion 301 covering yoke portion 112 in insulator 13. Specifically, guide portion 310 is a pedestal portion in which a part of vertical wall portion 302 protrudes in a pedestal shape outward in the radial direction.

As illustrated in Fig. 7, crossover wire 15 connecting two adjacent coils 12 is bent and stretched by guide portion 310 so as to be lifted in the direction (axial center direction) in which axial center C of rotating shaft 21 extends. That is, guide portion 310 supports crossover wire 15 in the direction in which axial center C of rotating shaft 21 extends. Therefore, guide portion 310 includes support surface 311 including fulcrum Pa that supports crossover wire 15 in the direction in which axial center C of rotating shaft 21 extends.

As illustrated in Fig. 7, support surface 311 of guide portion 310 is an inclined surface that is inclined in a side view (front view). Specifically, support surface 311 is inclined so as to go down toward a side of start point Ps of one coil 12 of two coils 12 to which crossover wire 15 is connected.

Fulcrum Pa on support surface 311 is located at a position higher than end point Pf of one coil 12 of two coils 12 to which crossover wire 15 is connected and start point Ps of another coil 12. That is, fulcrum Pa is located farther from core block 110 than end point Pf of one coil 12 and start point Ps of another coil 12 in a height direction of guide portion 310 (that is, the direction in which axial center C of rotating shaft 21 extends). As a result, crossover wire 15 can be lifted and stretched by guide portion 310. Therefore, the occurrence of slack in crossover wire 15 can be effectively suppressed.

A position of fulcrum Pa on support surface 311 is preferably lower than a position of the outermost end portion of guide portion 310. As a result, it is possible to suppress crossover wire 15 from sliding down sideways from support surface 311. That is, crossover wire 15 can be stably held on support surface 311.

As illustrated in Figs. 10 and 11, groove 312 that receives crossover wire 15 is formed on support surface 311 of guide portion 310. Groove 312 is provided on a side of vertical wall portion 302 (side opposite to an outer surface of guide portion 310) in a groove width direction. As described above, by receiving crossover wire 15 in groove 312, it is possible to prevent crossover wire 15 from falling off support surface 311. Therefore, crossover wire 15 can be stably held on support surface 311. Specifically, groove 312 is provided at a boundary portion between guide portion 310 and vertical wall portion 302. As illustrated in Fig. 15, in a cross-sectional view along the groove width direction, an inner side surface of groove 312 is an inclined surface that is inclined downward toward a side of vertical wall portion 302.

As illustrated in Figs. 6 to 8, two stator blocks 100 constituting stator block connection structure 101 are first stator block 100a and second stator block 100b connected to each other. First stator block 100a includes first core block 110a, first coil 12a wound around first core block 110a, and first insulator 13a including a portion located between first core block 110a and first coil 12a. Second stator block 100b includes second core block 110b, second coil 12b wound around second core block 110b, and second insulator 13b including a portion located between second core block 110b and second coil 12b. First core block 110a and second core block 110b are connected.

First coil 12a and second coil 12b are connected by crossover wire 15. Specifically, as illustrated in Figs. 7 and 8, crossover wire 15 connects end point Pf, which is a winding end position of first coil 12a, and start point Ps, which is a winding start position of second coil 12b. That is, one end portion of crossover wire 15 is connected to end point Pf of first coil 12a. The other end portion of crossover wire 15 is connected to start point Ps of second coil 12b. Therefore, guide portion 310 is located between end point Pf of first coil 12a and start point Ps of second coil 12b. As illustrated in Fig. 7, fulcrum Pa supporting crossover wire 15 in guide portion 310 exists at a position higher than either end point Pf of first coil 12a or start point Ps of second coil 12b. That is, fulcrum Pa exists at a position farther from first core block 110a and second core block 110b than both end point Pf of first coil 12a and start point Ps of second coil 12b in the height direction of guide portion 310 (that is, the direction in which axial center C of rotating shaft 21 extends).

Guide portion 310 may be provided on at least one of first insulator 13a and second insulator 13b. In the present exemplary embodiment, since the components are common, guide portion 310 is provided in both first insulator 13a and second insulator 13b.

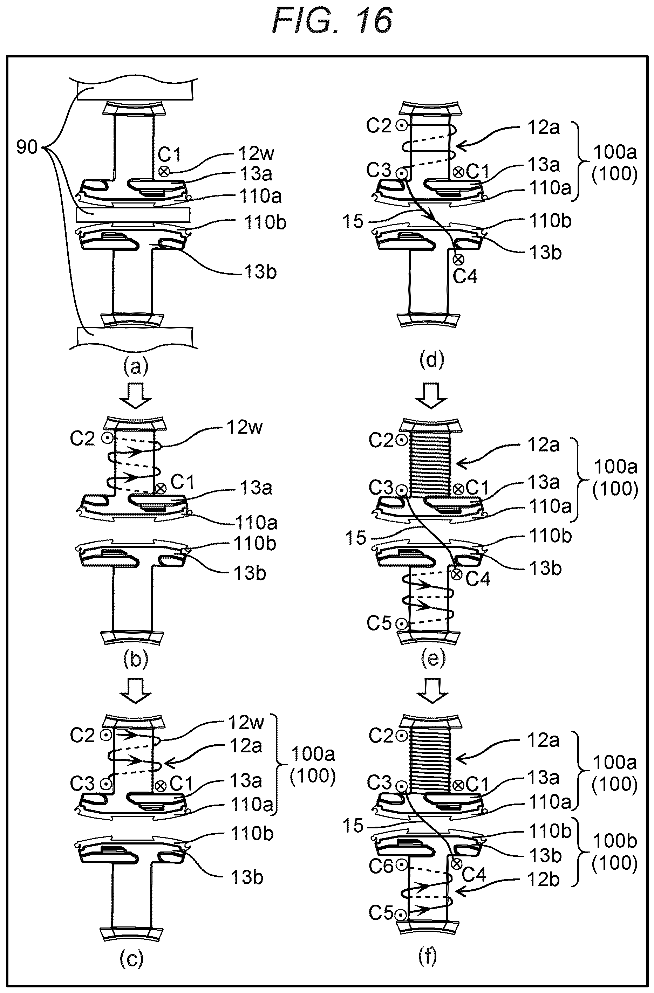

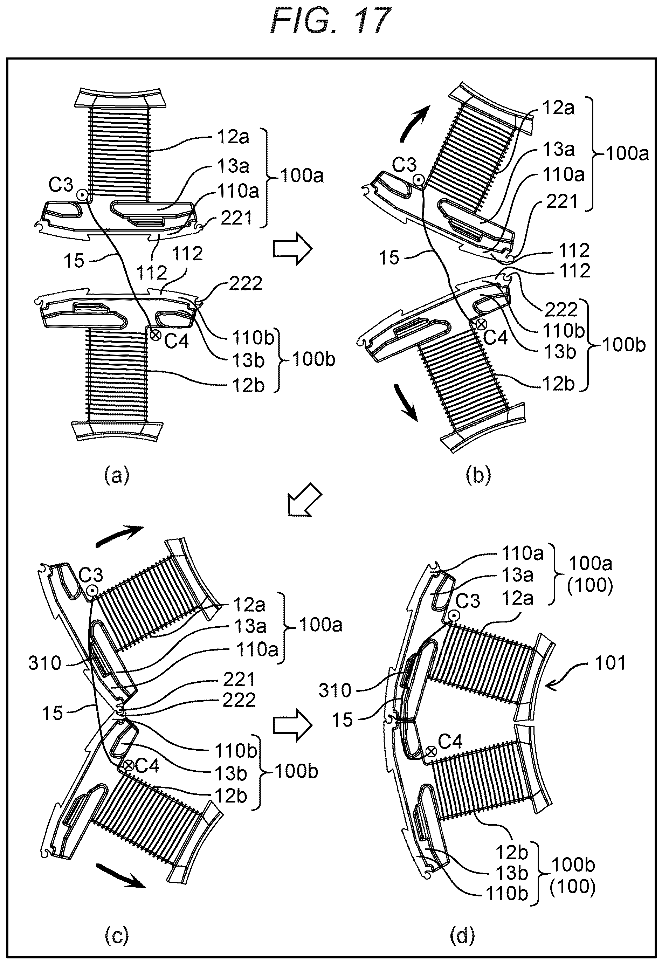

Next, a method for manufacturing stator block connection structure 101 according to the exemplary embodiment will be described with reference to Figs. 16 and 17. Fig. 16 is a diagram for describing a step of forming coil 12 by winding conductive wire 12w around stator block 100 in the method for manufacturing stator block connection structure 101 according to the exemplary embodiment. Fig. 17 is a diagram for describing a step of connecting two stator blocks 100 in the method for manufacturing a stator block connection structure according to the exemplary embodiment.

In Figs. 16 and 17, a method of connecting first stator block 100a and second stator block 100b will be described.

As illustrated in part (a) of Fig. 16, first core block 110a to which first insulator 13a is fixed and second core block 110b to which second insulator 13b is fixed are disposed to face each other. In this case, first core block 110a to which first insulator 13a is fixed and second core block 110b to which second insulator 13b is fixed are disposed using fixing jig 90. Note that, in the present exemplary embodiment, yoke portion 112 of first core block 110a and yoke portion 112 of second core block 110b are disposed so as to face each other. That is, first core block 110a and second core block 110b are disposed vertically symmetrically in the drawing.

Next, as illustrated in parts (b) to (f) of Fig. 16, conductive wire 12w is wound around first core block 110a and second core block 110b using a winding machine to form first coil 12a and second coil 12b. In this case, conductive wire 12w is wound not by moving the nozzle of the winding machine but by moving first core block 110a and second core block 110b integrally fixed by fixing jig 90. In the following steps, fixing jig 90 is omitted.

First, as illustrated in parts (b) and (c) of Fig. 16, conductive wire 12w is wound around first core block 110a via first insulator 13a to form first coil 12a.

Specifically, as illustrated in part (b) of Fig. 16, conductive wire 12w is wound around first core block 110a from winding start position C1 to turn-back position C2 in first core block 110a. Thereafter, as illustrated in part (c) of Fig. 16, conductive wire 12w is wound around first core block 110a from turn-back position C2 to winding end position C3. As a result, first coil 12a wound around first core block 110a via first insulator 13a can be formed. Winding start position C1 in first core block 110a is a start point of first coil 12a. Winding end position C3 in first core block 110a is an end point of first coil 12a.

Next, conductive wire 12w is wound around second core block 110b via second insulator 13b to form second coil 12b.

Specifically, as illustrated in part (d) of Fig. 16, conductive wire 12w wound around first core block 110a is moved to second core block 110b. That is, conductive wire 12w wound around first core block 110a is moved from winding end position C3 in first core block 110a to winding start position C4 in second core block 110b. At this time, conductive wire 12w extends across first core block 110a and second core block 110b. However, conductive wire 12w extending across first core block 110a and second core block 110b becomes crossover wire 15. Specifically, crossover wire 15 is a portion of conductive wire 12w between the end point (winding end position C3) of first coil 12a and the start point (winding start position C4) of second coil 12b.

A length of crossover wire 15 is preferably short. However, as will be described later, it is necessary to develop and connect first core block 110a and second core block 110b. Therefore, crossover wire 15 is made long to some extent in consideration of its development. That is, before connecting first core block 110a and second core block 110b, crossover wire 15 is in a slack state.

Thereafter, as illustrated in part (e) of Fig. 16, conductive wire 12w is wound around second core block 110b from winding start position C4 to turn-back position C5 in second core block 110b. Thereafter, as illustrated in part (f) of Fig. 16, conductive wire 12w is wound around second core block 110b from turn-back position C5 to winding end position C6. As a result, second coil 12b wound around second core block 110b via second insulator 13b can be formed. Winding start position C4 in second core block 110b is a start point of second coil 12b. Winding end position C6 in second core block 110b is an end point of second coil 12b.

In this manner, first stator block 100a around which first coil 12a is wound via first insulator 13a and second stator block 100b around which second coil 12b is wound via second insulator 13b can be produced in a state where first coil 12a and second coil 12b are connected by crossover wire 15.

Next, first core block 110a around which first coil 12a is wound and second core block 110b around which second coil 12b is wound are connected.

Specifically, after first core block 110a around which first coil 12a is wound and second core block 110b around which second coil 12b is wound are removed from fixing jig 90, first stator block 100a and second stator block 100b in which first coil 12a and second coil 12b are connected by crossover wire 15 are horizontally rotated and developed in the procedures of parts (a) to (d) of Fig. 17, whereby first core block 110a and second core block 110b are connected. At this time, as illustrated in part (c) of Fig. 17, projection 221 provided in first core block 110a and recess 222 provided in second core block 110b are fitted to connect first core block 110a and second core block 110b.

In this step, as illustrated in parts (c) and (d) of Fig. 17, first core block 110a and second core block 110b are connected while crossover wire 15 connecting first coil 12a and second coil 12b is guided by guide portion 310 provided in first insulator 13a fixed to first core block 110a. At this time, crossover wire 15 is supported by guide portion 310 in the direction in which axial center C of rotating shaft 21 extends (a direction perpendicular to the paper surface of Fig. 17). Specifically, crossover wire 15 is supported by support surface 311 of guide portion 310.

As a result, crossover wire 15 that has slackened before first core block 110a and second core block 110b are developed can be stretched by being guided by guide portion 310.

In this way, it is possible to produce stator block connection structure 101 including first stator block 100a and second stator block 100b in a state in which first coil 12a and second coil 12b are connected by crossover wire 15 and first core block 110a and second core block 110b are connected.

Note that, in the present exemplary embodiment, crossover wire 15 is guided using guide portion 310 of first insulator 13a in first stator block 100a. However, the present disclosure is not limited to this configuration. For example, depending on how conductive wire 12w is wound, crossover wire 15 may be guided using guide portion 310 of second insulator 13b in second stator block 100b. Therefore, in the present exemplary embodiment, guide portion 310 is provided in both first insulator 13a and second insulator 13b. However, the present disclosure is not limited to this configuration. That is, guide portion 310 may be provided on at least one of first insulator 13a and second insulator 13b.

As described above, according to stator block connection structure 101 of the present exemplary embodiment, guide portion 310 that guides crossover wire 15 is provided on at least one of first insulator 13a and second insulator 13b. Guide portion 310 includes support surface 311 including fulcrum Pa that supports crossover wire 15 in the direction (axial center direction) in which axial center C of rotating shaft 21 extends.

By providing guide portion 310 that guides crossover wire 15 in this manner, guide portion 310 serves as a guideline. Accordingly, crossover wire 15 can be easily held by first insulator 13a or second insulator 13b without slackening. Moreover, by supporting crossover wire 15 by support surface 311 in the direction (axial center direction) in which axial center C of rotating shaft 21 extends, crossover wire 15 can be supported by support surface 311 regardless of the wire diameter of crossover wire 15 (coil wire). That is, guide portion 310 having one shape can handle crossover wires 15 having a plurality of types of wire diameters. Furthermore, by using support surface 311 as the location where crossover wire 15 is supported, crossover wire 15 can be supported by a surface instead of being supported only by a point. Accordingly, it is possible to prevent a load from being applied only to fulcrum Pa of crossover wire 15. However, crossover wire 15 may be supported only at fulcrum Pa of support surface 311. Moreover, the shape of guide portion 310 in the present exemplary embodiment is simplified as compared with the shape of the holding portion (wall portion including a groove) disclosed in PTL 1. Therefore, the mold can be simplified. Accordingly, the cost can be reduced, and the assembling workability can be improved.

As described above, according to stator block connection structure 101 of the present exemplary embodiment, even in a case where two core blocks 110 are connected, it is possible to handle crossover wires 15 of a plurality of types of wire diameters. Moreover, crossover wire 15 can be easily held without being slack.

Furthermore, in stator block connection structure 101 according to the present exemplary embodiment, fulcrum Pa on support surface 311 of guide portion 310 is located at a position higher than end point Pf of first coil 12a and start point Ps of second coil 12b.

With this configuration, crossover wire 15 can be lifted and stretched in the axial center direction of rotating shaft 21 by guide portion 310. Therefore, the occurrence of slack in crossover wire 15 can be further suppressed.

Furthermore, in stator block connection structure 101 according to the present exemplary embodiment, groove 312 that receives crossover wire 15 is formed on support surface 311 of guide portion 310. That is, groove 312 is formed as a stepped portion of support surface 311.

With this configuration, it is possible to prevent crossover wire 15 from falling off from support surface 311. Moreover, play of crossover wire 15 can be suppressed.

Furthermore, in stator block connection structure 101 according to the present exemplary embodiment, support surface 311 of guide portion 310 is an inclined surface that is inclined. Specifically, in a case where crossover wire 15 connecting end point Pf of first coil 12a and second coil 12b is supported by guide portion 310, support surface 311 of guide portion 310 is inclined so as to go down toward a side of start point Ps of second coil 12b.

With this configuration, crossover wire 15 connecting end point Pf of first coil 12a and second coil 12b can be easily supported by guide portion 310 without generating deflection in crossover wire 15.

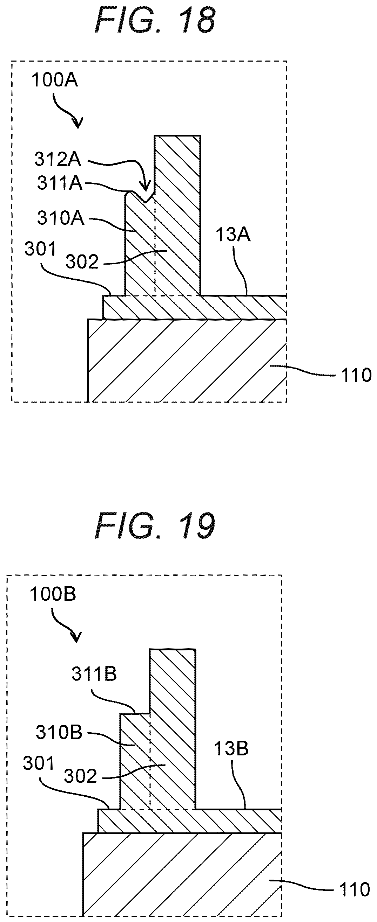

Furthermore, in the above exemplary embodiment, the cross-sectional shape in the width direction of groove 312 provided on support surface 311 of guide portion 310 is a shape inclined so as to go down straight toward vertical wall portion 302 as illustrated in Fig. 15. However, the present disclosure is not limited to this configuration. Fig. 18 is a partially enlarged view illustrating a configuration of stator block 100A according to Modification 1. Fig. 19 is a partially enlarged view illustrating a configuration of stator block 100B according to Modification 2. For example, as in insulator 13A of stator block 100A illustrated in Fig. 18, the cross-sectional shape in the width direction of groove 312A provided in support surface 311A of guide portion 310A may be a V shape. Like insulator 13B of stator block 100B illustrated in Fig. 19, no groove may be formed in support surface 311B of guide portion 310B, and support surface 311B may be a flat surface.

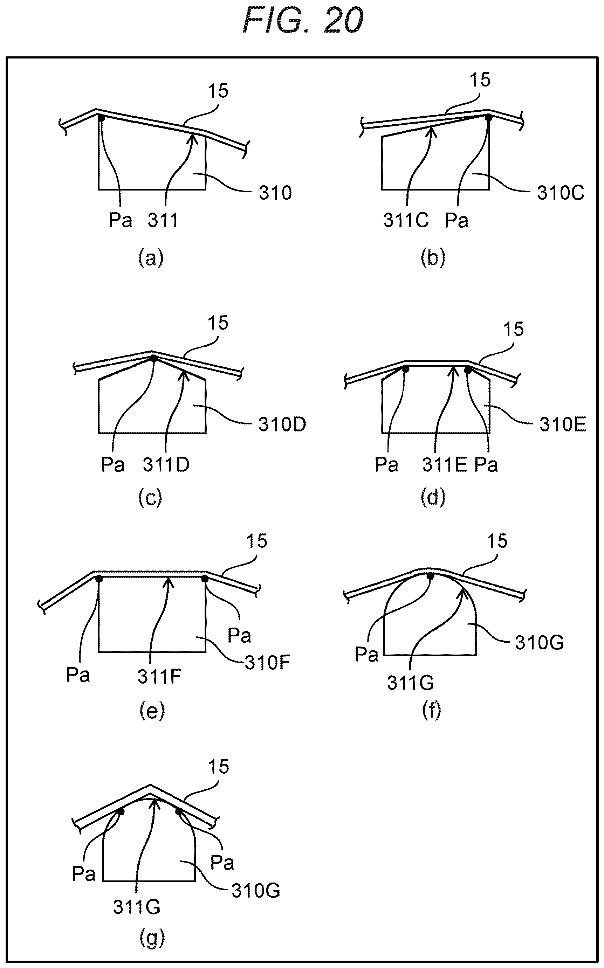

Fig. 20 is a diagram illustrating a variation of guide portion 310 of insulator 13. In the above exemplary embodiment, as illustrated in part (a) of Fig. 20, the shape of support surface 311 of guide portion 310 in a side view is inclined so as to go down toward a side of start point Ps (the right side in Fig. 20) of second coil 12b to which crossover wire 15 is connected. However, the present disclosure is not limited to this configuration. Specifically, as illustrated in part (b) of Fig. 20, the shape of support surface 311C of guide portion 310C in a side view may be inclined so as to go down toward a side of end point Pf (the left side in Fig. 20) of first coil 12a to which crossover wire 15 is connected.

Furthermore, in the above exemplary embodiment, guide portion 310 has a trapezoidal shape in a side view as illustrated in part (a) of Fig. 20. However, the present disclosure is not limited to this configuration. Specifically, as illustrated in part (c) of Fig. 20, guide portion 310D may have a pentagonal shape in a side view. In this case, fulcrum Pa of support surface 311D of guide portion 310D is located at the center of support surface 311D. However, the present disclosure is not limited to this configuration.

Furthermore, as illustrated in part (d) of Fig. 20, guide portion 310E may have a hexagonal shape in a side view. In this case, two fulcrums Pa may exist on support surface 311E of guide portion 310E. That is, crossover wire 15 may be supported at two locations on support surface 311E.

Furthermore, as illustrated in part (e) of Fig. 20, guide portion 310F may have a rectangular shape in a side view. In this case, support surface 311F of guide portion 310F is a flat surface that is not inclined. Also in this case, two fulcrums Pa exist on support surface 311F of guide portion 310F. Crossover wire 15 is supported at two locations on support surface 311F.

Furthermore, as illustrated in part (f) of Fig. 20, a shape of support surface 311G of guide portion 310G in a side view may be an arc. That is, support surface 311G may be a curved surface. In this case, crossover wire 15 may be supported by one fulcrum Pa of support surface 311G as illustrated in part (f) of Fig. 20, or may be supported by two fulcrums Pa of support surface 311G as illustrated in part (g) of Fig. 20. That is, depending on how crossover wire 15 is guided by guide portion 310G, one fulcrum Pa may exist or two fulcrums Pa may exist on support surface 311G.

As illustrated in parts (a) to (g) of Fig. 20, crossover wire 15 and support surfaces 311C to 311G may be in point contact or in surface contact. Support surfaces 311C to 311G may have one fulcrum Pa or two or more fulcrums Pa.

Furthermore, in the above exemplary embodiment, when conductive wire 12w is wound around first core block 110a to which first insulator 13a is fixed and second core block 110b to which second insulator 13b is fixed, as illustrated in part (a) of Fig. 16, first core block 110a to which first insulator 13a is fixed and second core block 110b to which second insulator 13b is fixed are set in fixing jig 90 such that yoke portion 112 of first core block 110a and yoke portion 112 of second core block 110b face each other (that is, in reverse vertical arrangement). However, the present disclosure is not limited to this configuration.

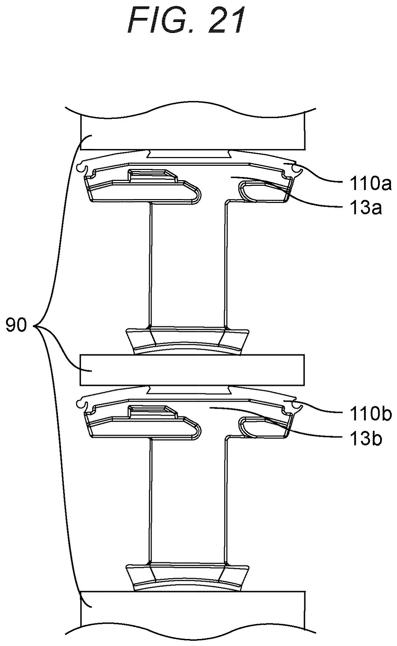

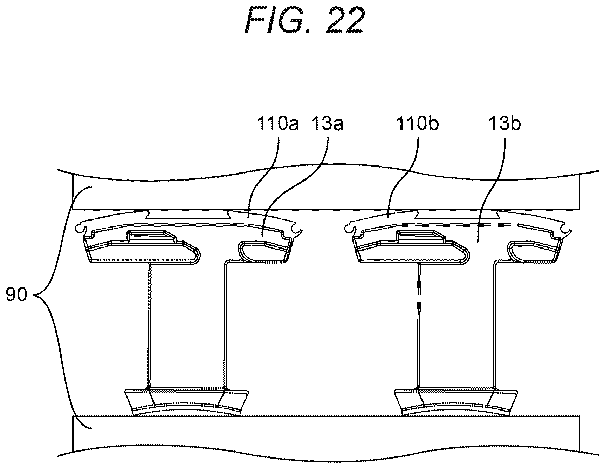

Fig. 21 is a diagram illustrating a first modification of an arrangement pattern of the two core blocks in the method for manufacturing stator block connection structure 101. Fig. 22 is a diagram illustrating a second modification of the arrangement pattern of the two core blocks in the method for manufacturing stator block connection structure 101. For example, as illustrated in Fig. 21, first core block 110a to which first insulator 13a is fixed and second core block 110b to which second insulator 13b is fixed may be set in fixing jig 90 such that first core block 110a and second core block 110b are aligned vertically in the same direction. Alternatively, as illustrated in Fig. 22, first core block 110a to which first insulator 13a is fixed and second core block 110b to which second insulator 13b is fixed may be set in fixing jig 90 such that first core block 110a and second core block 110b are arranged side by side in the same direction.

### (Modifications)

The present disclosure has been described above on the basis of the exemplary embodiments. The present disclosure is not limited to the above exemplary embodiment.

For example, in the above exemplary embodiment, stator block connection structure 101 is formed by connecting two stator blocks 100. However, the present disclosure is not limited to this configuration. Specifically, stator block connection structure 101 may be formed by connecting three or more stator blocks 100.

Furthermore, in the above exemplary embodiment, stator 10 includes molding resin 14. However, the present disclosure is not limited to this configuration. That is, stator 10 may not include molding resin 14.

Furthermore, in the above exemplary embodiment, rotor 20 is an IPM rotor. However, the present disclosure is not limited to this configuration. For example, rotor 20 may be a surface permanent magnet (SPM) rotor in which a plurality of permanent magnets are provided on an outer surface of the rotor core.

Furthermore, in the above exemplary embodiment, motor 1 has 10 poles and 12 slots. However, the present disclosure is not limited to this configuration. That is, the number of slots of stator 10 is not limited to 12. The number of magnetic poles of rotor 20 is not limited to 10 (that is, the number of permanent magnets 23 is not limited to 10). Any number of slots of stator 10 and any number of magnetic poles of rotor 20 can be applied.

In addition, the present disclosure also includes a mode obtained by applying various modifications conceived by those skilled in the art to each of the above exemplary embodiments and modifications, or a mode realized by arbitrarily combining configuration elements and functions in the above exemplary embodiments without departing from the gist of the present disclosure.

### INDUSTRIAL APPLICABILITY

The technology of the present disclosure can be widely used for a motor, an electric device including the motor, and the like.

### REFERENCE MARKS IN THE DRAWINGS

1: motor
10: stator
11: stator core
11a: tooth
11b: yoke
11c: slot
12: coil
12w: conductive wire
12a: first coil
12b: second coil
13, 13A, 13B: insulator
13a: first insulator
13b: second insulator
14: molding resin
15: crossover wire
20: rotor
21: rotating shaft
22: rotor core
23: permanent magnet
30: first bearing
40: second bearing
50: first bracket
50a: recess
50b: through hole
51: bracket protrusion
51a: bracket top plate part
51b: bracket side plate part
52: heat dissipation fin
60: second bracket
60a: recess
70: first cover
70a: through hole
71: outer protrusion
72: inner top plate part
73: inner side plate part
80: second cover
80a: through hole
81: inner protrusion
82: outer top plate part
83: outer side plate part
90: fixing jig
100, 100A, 100B: stator block
100a: first stator block
100b: second stator block
101: stator block connection structure
110: core block
110a: first core block
110b: second core block
111: tooth portion
112: yoke portion
112a: first end portion
112b: second end portion
131: first member
132: second member
211: first connection surface
212: second connection surface
221: projection
222: recess
301: flange portion
302: vertical wall portion
310, 310A, 310B, 310C, 310D, 310E, 310F, 310G: guide portion
311, 311A, 311B, 311C, 311D, 311E, 311F, 311G: support surface
312, 312A: groove
C: axial center
Pa: fulcrum
Ps: start point
Pf: end point

## Claims

1. A method for manufacturing a stator block connection structure to be used for a stator configured by annularly connecting a plurality of adjacent stator blocks including a first stator block and a second stator block, the method comprising:
a first step of disposing the first stator block in which a first insulator is fixed to a first core block and the second stator block in which a second insulator is fixed to a second core block to face each other;
a second step of forming a first coil by winding a conductive wire around the first core block via the first insulator;
a third step of forming a second coil by winding the conductive wire around the second core block via the second insulator; and
a fourth step of connecting the first core block around which the first coil is wound and the second core block around which the second coil is wound,
wherein in the fourth step, the first core block and the second core block are connected while a crossover wire that is a portion of the conductive wire between an end point of the first coil and a start point of the second coil is guided by a guide portion provided on at least one of the first insulator and the second insulator, and
the crossover wire is supported by the guide portion in an axial center direction of a rotating shaft in a motor on which the stator is mounted.

2. A stator block connection structure used for a stator configured by annularly connecting a plurality of adjacent stator blocks including a first stator block and a second stator block,
the first stator block including:
a first core block;
a first coil wound around the first core block; and
a first insulator including a portion located between the first core block and the first coil,
the second stator block including:
a second core block connected to the first core block;
a second coil connected to the first coil by a crossover wire and wound around the second core block; and
a second insulator including a portion located between the second core block and the second coil,
wherein at least one of the first insulator and the second insulator is provided with a guide portion that guides the crossover wire, and
the guide portion includes a support surface including a fulcrum that supports the crossover wire in an axial center direction of a rotating shaft of a motor on which the stator is mounted.

3. The stator block connection structure according to Claim 2, wherein
the crossover wire includes one end portion connected to an end point of the first coil,
the crossover wire includes another end portion connected to a start point of the second coil, and
the fulcrum exists at a position higher than the end point and the start point.

4. The stator block connection structure according to Claim 2 or 3, wherein the support surface is provided with a groove that receives the crossover wire.

5. The stator block connection structure according to Claim 2 or 3, wherein the support surface is an inclined surface that is inclined.

6. The stator block connection structure according to Claim 5, wherein the support surface is inclined to go down toward a side of a start point of the second coil.

7. The stator block connection structure according to Claim 2 or 3, wherein the support surface is a curved surface.

8. The stator block connection structure according to Claim 2 or 3, wherein the support surface is a plane that is not inclined.

9. The stator block connection structure according to Claim 2 or 3, wherein the fulcrum includes a plurality of the fulcrums.

10. The stator block connection structure according to Claim 2 or 3, wherein the guide portion is a protrusion protruding from an outer surface of at least one of the first insulator and the second insulator toward an outer periphery in a direction orthogonal to the axial center direction.

11. A stator in which the stator block connection structures according to Claim 2 or 3 are annularly connected.

12. A motor comprising:
the stator according to claim 11; and
a rotor located to face the stator.
